## Europäisches Patentamt

## European Patent Office

## Office européen des brevets

(11) Veröffentlichungsnummer: **0 263 776 B1**

(12) # EUROPÄISCHE PATENTSCHRIFT

(45) Veröffentlichungstag der Patentschrift:
25.04.90

(51) Int. Cl.⁴: **C02F 1/66**, C02F 1/04, C02F 1/62

(21) Anmeldenummer: 87730070.7

(22) Anmeldetag: 01.07.87

(54) Verfahren zur Aufarbeitung von Abwässern aus Rauchgasreinigungsanlagen.

(30) Priorität: 08.10.86 DE 3634666

(43) Veröffentlichungstag der Anmeldung:
13.04.88 Patentblatt 88/15

(45) Bekanntmachung des Hinweises auf die Patenterteilung:
25.04.90 Patentblatt 90/17

(84) Benannte Vertragsstaaten:
DE GB IT NL

(56) Entgegenhaltungen:
DE-A- 3 538 231

BRENNSTOFF-WÄRME-KRAFT, Band 37, Nr. 9,
September 1985, Seiten 352-355; J.C. NEUMANN et al.:
"Behandlung und Aufarbeitung von Abwässern aus
Rauchgaswäschen"

(73) Patentinhaber: MANNESMANN Aktiengesellschaft,
Mannesmannufer 2, D-4000 Düsseldorf 1(DE)

(72) Erfinder: Bauschlicher, Hans, Zieglerstrasse 7,
D-4100 Duisburg 1(DE)
Erfinder: Hofmann, Günter, Akazienhof 14,
D-4100 Duisburg 1(DE)
Erfinder: Linstaedt, Wolfgang, Krefeld Strasse 230,
D-4150 Krefeld 29(DE)
Erfinder: Schmitz, Reiner, Dorfstrasse 44 b,
D-4100 Duisburg 46(DE)
Erfinder: Wilop, Albert, Dipl.-Ing., Peterburggrafweg 14,
D-4300 Essesn 14(DE)

(74) Vertreter: Meissner, Peter E., Dipl.-Ing. et al,
Patentanwaltsbüro Meissner & Meissner,
Herbertstrasse 22, D-1000 Berlin 33(DE)

## Beschreibung

Die Erfindung betrifft ein Verfahren zur Aufarbeitung von Abwässern aus Rauchgasreinigungsanlagen (insbesondere zur Rauchgasentschwefelung) gemäß dem Oberbegriff des Patentanspruchs.

Bei diesen Abwässern handelt es sich um saure wässrige Lösungen, die neben einer Vielzahl von Begleitsubstanzen in niedriger Konzentration als Hauptinhaltsstoffe $CaCl_2$ und $MgCl_2$ enthalten. In zunehmendem Maße wird die totale Aufarbeitung dieser Abwässer in widerwendbare und deponierbare Feststoffe und wiedereinsetzbares Kondensat gefordert, weil eine Ableitung in Gewässer aus Umweltschutzgründen oft nicht vertretbar ist. Abgesehen von einer möglichen Vorkonzentrierung über andere physikalische Konzentrierverfahren wie beispielsweise die Umkehrosmose (RO) oder die Elektrodialyse mit wechselnder Polarität (EDR) kommen als Aufarbeitungsverfahren für die Endkonzentrierung nur Eindampfung und Verdampfungskristallisation in Betracht. Hierzu ist es bekannt, die Lösungen entweder soweit einzudampfen, daß ein Konzentrat entsteht, welches bei Abkühlung unter Hydratbildung erstarrt, oder aber die Inhaltsstoffe zu kristallisieren und abzutrennen und die Mutterlauge bis zur vollständigen Aufarbeitung zu rezirkulieren. (vgl. BWK Nr. 9/1985, Seite 352 - 355).

Erfahrungen aus einer solchen Abwassereindampfanlage zeigen jedoch, daß die Eindampfung auf Konzentrate, die bei Abkühlung erstarren sollen, nicht immer erstarrungsfähige Konzentrate liefert.

Aufgabe der Erfindung ist es daher, ein Verfahren zur Aufarbeitung derartiger Abwässer vorzuschlagen, bei dem die Eindampfung in jedem Fall zu einem erstarrungsfähigen Konzentrat führt.

Gelöst wird diese Aufgabe durch ein Verfahren mit den Merkmalen des Patentanspruchs I; eine vorteilhafte Weiterbildung ist im Anspruch 2 angegeben.

In umfangreichen Untersuchungen an Abwasserkonzentraten unterschiedlicher Eindampfgrade konnte der erfindungsgemäße Lösungsweg gefunden werden; anfänglich gangbar erscheinende Verfahrensweisen erwiesen sich als nicht durchführbar:

- Selbst bei hochkonzentrierten Lösungen kann es vorkommen, daß bei Abkühlung auf Umgebungstemperatur eine Erstarrung ausbleibt bzw. die vollständige Verfestigung nicht eintritt.

- Die an sich naheliegende Maßnahme einer Aufkonzentrierung bis zur Kristallisation der Hauptkomponenten $CaCl_2$ und $MgCl_2$ ist nicht sicher zu beherrschen, da sich bei wechselnden Anteilen an Calcium- und Magnesiumionen unterschiedliche kristalline Phasen bilden. Das kann dazu führen, daß eine bei höherer Temperatur erzeugte Phase beim Abkühlen unter Umwandlung aufschmilzt. Je nach dem Mengenverhältnis von $CaCl_2$ und $MgCl_2$ kann es auch zu einem plötzlichen Erstarren der gesamten Flüssigkeit bei nur noch geringer Aufkonzentrierung im Kristallisator kommen.

- Die durch Kristallisation von Nebenkomponenten (z.B. KCl, NaCl) entstehenden Suspensionen werden in Abhängigkeit vom Kristallisatgehalt zunehmend viskoser, so daß in Umlaufverdampfern eine Grenze für die Aufkonzentrierung gegeben ist, die noch nicht zur Erstarrung führt.

- Die Hochkonzentrierung in Filmverdampfern bedeutet bei atmosphärischem Betrieb ein hohes Werkstoffrisiko, da bei den sich einstellenden hohen Betriebstemperaturen in der Lösung (Schmelze) chemische Reaktionen ausgelöst werden. Diese sind auch bei stetiger Zugabe von Neutralisationsmitteln nicht ohne weiteres zu beherrschen. Als Reaktionsprodukte können beispielsweise Halogene oder auch reaktionsfähige Halogenverbindungen freigesetzt werden, die auch in das Kondensat gelangen können.

- Die Hochkonzentrierung im Vakuumbetrieb zur Absenkung der Betriebstemperatur und damit Abmilderung der Aggressivität der Lösung bringt für Filmverdampfer z.B. Verkrustungs- und/oder Verschleißprobleme mit sich.

- Es konnte gefunden werden, daß Abwässer aus Rauchgasreinigungsanlagen mit den angegebenen Komponenten ohne die beschriebenen Nachteile sicher zu erstarrungsfähigen Konzentraten eingedampft werden können, wenn Magnesium nicht oder nur in sehr geringer Konzentration vorliegt.

Es ist Stand der Technik, daß zur Schonung der Werkstoffe der Aufarbeitungsanlage vor der Eindampfung stets eine Neutralisation der Abwässer vorgenommen wird. Üblicherweise wird dabei mit pH-Werten zwischen 7 und 9 gearbeitet (vgl. VGB Kraftwerkstechnik, Heft I, 1984, Seite 4I - 49). Dabei wird die Mehrzahl der Metalle als Hydroxide ausgefällt. Für die Ausfällung von Magnesium als $Mg(OH)_2$ liegt der pH-Wert jedoch zu niedrig. Üblicherweise vermeidet man bewußt die Ausfällung des Magnesiumhydroxids, weil dieses sich nicht nur schlecht sedimentieren läßt, sondern auch besonders große Schlammvolumina hervorruft. Bei der Verfahrensweise nach dem Stand der Technik können daher die geschilderten Schwierigkeiten eintreten.

Es bietet sich an, die erfindungsgemäße Ausfällung des Magnesium-Hydroxids in Verbindung mit der ohnehin stattfindenden Abwasserneutralisation, d.h. vor der Eindampfung vorzunehmen und den pH-Wert beispielsweise auf IO zu bringen. Es ist jedoch ohne weiteres möglich, die Magnesium-Ausfällung erst später durchzuführen. Wird beispielsweise die Eindampfung in mehreren Schritten vollzogen, so muß die Ausfällung spätestens vor dem letzten Eindampfungsschritt stattfinden. Nach Abtrennung der ausgefällten Bestandteile kann die so gewonnene Lösung zuverlässig zu erstarrungsfähigen Konzentraten eingedampft werden.

Anhand des Verfahrensschemas wird die Erfindung in einer möglichen Ausführung näher erläutert.

Das aufzuarbeitende Abwasser I aus einer nicht dargestellten Rauchgasreinigungsanlage wird in den Reaktionsbehälter 2 eingespeist. Durch Zugabe von Kalkmilch 3 wird ein pH-Wert von etwa lO eingestellt und die Fällung des $Mg^{++}$ als $Mg(OH)_2$ vollzogen. Die erhaltene Suspension 4 läuft in einen statischen Eindicker 5 ab. Zur Verbesserung des Absetz- und Sedimentationsverhaltens kann ein Flockungshilfsmittel 6 zugesetzt werden. Die eingedickte Suspension 7 gelangt über die Suspensionpumpe 8 in die Filterpresse 9. Hier erfolgt die Abtrennung der Ausfällungen lO, die bei Einstellung des Fällungs-pH-Wertes auf mindestens lO auch das $Mg(OH)_2$ enthalten. Die gefilterte Lösung ll wird in den Eindicker 5 zurückgeführt. Die geklärte und von $Mg^{++}$ befreite Lösung l2 läuft in den Vorlagebehälter l3 für die Eindampfkristallisation, die bei Atmosphärendruck erfolgt. Sie könnte auch im Vakuum vorgenommen werden. Über die Speisepumpe l4 gelangt die Einspeiselösung l5 in den Verdampfungskristallisator l6, in dem mittels eines durch die Leitungen l9, 2O zu- bzw. abgeführten Heizmediums eine Aufkonzentrierung zu einem Konzentrat bzw. einer Kristallsuspension l7 erfolgt.

Der anfallende Brüden 2l wird entweder in einem Kondensator niedergeschlagen oder bei mehrstufigen Anlagen zur Beheizung der nachfolgenden Stufen verwendet. Ebenso können zum Zwecke der Energieeinsparung die Brüden komprimiert werden und zur Beheizung wiederverwendet werden, sofern die Siedepunktserhöhung der Lösung dies zuläßt. Das Konzentrat l7 wird in Behälter l8 abgefüllt und erstarrt dort nach Abkühlung vollständig.

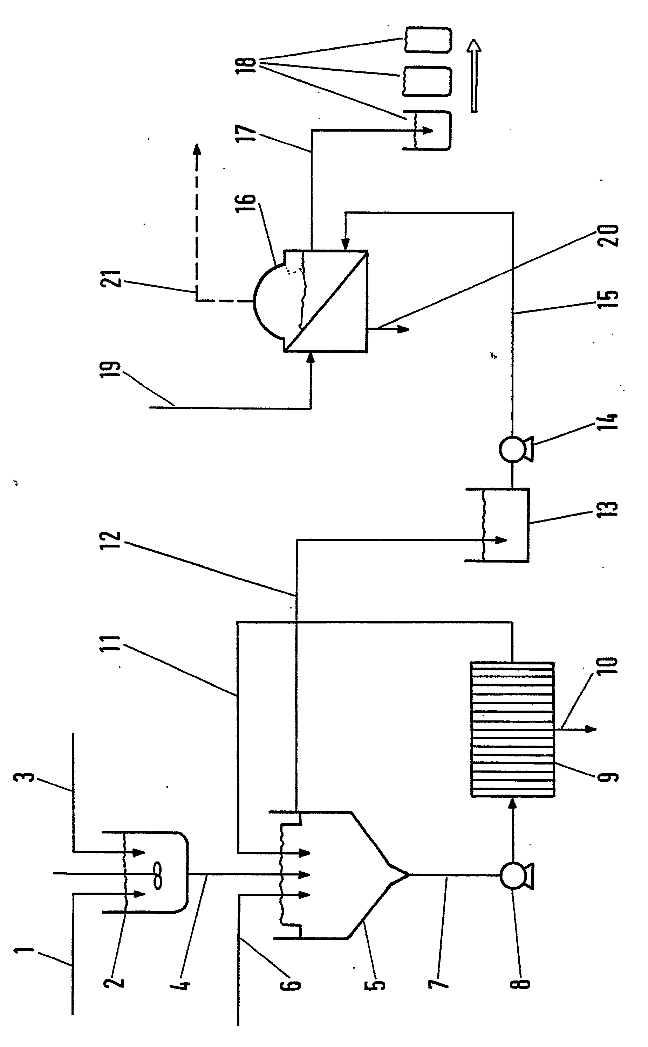

**Patentansprüche**

l. Verfahren zur Aufarbeitung von mit $CaCl_2$ und $MgCl_2$ sowie weiteren Verunreinigungen belasteten Abwässern aus Rauchgasreinigungsanlagen, die auf der Basis von Kalk- oder Kalksteinnaßwäschen arbeiten, wobei die sauren Abwässer zunächst neutralisiert und die dabei ausfallenden Schwermetallhydroxide abgetrennt werden, bevor die Abwässer durch Eindampfung in wiederverwendbares Kondensat und zur Deponierung bestimmte, hochfeststoffhaltige Konzentrate getrennt werden, dadurch gekennzeichnet, daß zur sicheren Erzielung einer vollständigen Erstarrung der Konzentrate durch Abkühlung auf Umgebungstemperatur der pH-Wert der Abwässer vor der Eindampfung oder, falls die Eindampfung in mehreren Schritten vorgenommen wird, vor dem letzten Eindampfschritt zur Ausfällung von $Mg(OH)_2$ angehoben und das ausgefällte $Mg(OH)_2$ abgetrennt wird mit der Maßgabe, daß der Quotient der Massenkonzentration $CaCl_2$ : $MgCl_2$ mindestens lO beträgt.

2. Verfahren nach Anspruch l, dadurch gekennzeichnet, daß der Quotient der Massenkonzentration $CaCl_2$ : $MgCl_2$ mindestens 2O beträgt.

**Claims**

1. A method for processing waste water from flue gas purification plants which is laden with $CaCl_2$ and $MgCl_2$ and other impurities, which plants operate on the basis of wet lime or limestone washing, the acidic waste water first being neutralised and the heavy metal hydroxides which are precipitated in the process being separated out, before the waste water is separated by condensation by evaporation into reusable condensate and concentrates having a high solids content which are intended for disposal, characterised in that in order reliably to achieve complete solidification of the concentrates by cooling to ambient temperature, the pH value of the waste water before condensation or, if the condensation is carried out in several steps, before the last condensation step is raised in order to precipitate $Mg(OH)_2$, and the precipitated $Mg(OH)_2$ is separated out, with the proviso that the quotient of the concentration by mass of $CaCl_2$ : $MgCl_2$ is at least 10.

2. A method according to Claim 1, characterised in that the quotient of the concentration by mass of $CaCl_2$ : $MgCl_2$ is at least 20.

**Revendications**

1. Procédé pour le retraitement d'eaux usées, provenant d'installations de dépoussiérage de gaz de fumée, chargées de $CaCl_2$ et $MgCl_2$ ainsi que d'autres impuretés, installations qui travaillent sur la base du lavage au calcaire ou à la chaux, les eaux usées acides étant tout d'abord neutralisées et les hydroxydes de métaux lourds qui précipitent étant séparés, avant que les eaux usées ne soient séparées, par évaporation, en condensat réutilisable et en concentré qui contient de la matière solide destinée au dépôt à la décharge de déchets, caractérisé en ce que, pour obtenir de façon sûre une solidification complète du concentré par refroidissement à la température ambiante, le pH des eaux usées est augmenté avant l'évaporation ou, dans le cas où l'évaporation est effectuée en plusieurs étapes, avant la dernière étape d'évaporation, pour la précipitation de $Mg(OH)_2$, et $Mg(OH)_2$ précipité est séparé, sous réserve que le rapport des concentrations massiques $CaCl_2$ : $MgCl_2$ s'élève à au moins 10.

2. Procédé selon la revendication 1, caractérisé en ce que le rapport des concentrations massiques $CaCl_2$ : $MgCl_2$ s'élève à au moins 20.

EP 0 263 776 B1